# EUROPEAN PATENT SPECIFICATION

(11) **EP 4 299 205 B1**
(45) Date of publication and mention of the grant of the patent: **24.12.2025**
(21) Application number: 23182725.4
(22) Date of filing: 30.06.2023
(51) Int. Cl.: B21D 45/00, B21D 45/04, B26D 7/18, B26F 1/40, B21D 45/06

(54) **NOTCHING APPARATUS FOR ELECTRODE SUBSTRATE OF RECHARGEABLE BATTERY**
KERBUNGSVORRICHTUNG FÜR EIN ELEKTRODENSUBSTRAT EINER WIEDERAUFLADBAREN BATTERIE
APPAREIL D'ENCOCHAGE POUR SUBSTRAT D'ÉLECTRODE DE BATTERIE RECHARGEABLE

(30) Priority: 30.06.2022 KR 20220080905
(43) Date of publication of application: 03.01.2024
(73) Proprietor: Samsung SDI Co., Ltd., Yongin-si, Gyeonggi-do 17084 (KR)
(72) Inventor: JANG, Youngjin, 17084 Yongin-si (KR); JO, Jinmyung, 17084 Yongin-si (KR); KWON, Sungjin, 17084 Yongin-si (KR); KWON, Sungjin, 17084 Yongin-si (KR); CHOI, Junghun, 17084 Yongin-si (KR)
(74) Representative: Marks & Clerk LLP

(56) References cited:
- WO-A1-2010/082372
- DE-A1- 4 106 068
- KR-A- 20190 112 379
- KR-A- 20220 059 398
- KR-B1- 102 495 105

## Description

### BACKGROUND OF THE INVENTION

### (a) Field of the Invention

The present disclosure relates to a notching apparatus for an electrode substrate of a rechargeable battery. More particularly, the present disclosure relates to a notching apparatus for an electrode substrate of a rechargeable battery capable of discharging scraps that are generated while manufacturing an electrode by notching a continuously supplied electrode substrate.

### (b) Description of the Related Art

A rechargeable battery is a battery that repeatedly performs charging and discharging unlike a primary battery. Small-capacity secondary batteries are used in small portable electronic devices such as mobile phones, notebook computers, and camcorders. High-capacity and high-density secondary batteries are used for power or energy storage for driving motors in hybrid and electric vehicles.

The rechargeable battery includes an electrode assembly for charging and discharging a current, a case or pouch for receiving the electrode assembly and an electrolyte solution, and an electrode terminal connected to the electrode assembly and drawn to an outside of the case or pouch. The electrode assembly may be formed in a jelly roll type formed by winding an electrode and a separator or in a stack type formed by stacking an electrode and a separator.

An electrode used in a stack type rechargeable battery is manufactured by notching the electrode substrate having a coated portion and an uncoated portion. A notching apparatus used in a notching process of the electrode substrate typically includes a lower mold assembly having a die and an upper mold assembly having a punch. The notching apparatus manufactures the electrode by notching the electrode substrate inserted between the lower plate mold assembly and the upper plate mold assembly into a desired shape by relative ascending and/or descending operation of the die and the punch.

At this time, scrap is generated on the lower side of the punch and the inner side of the die. In order to take out scrap, an air method, a pin method, a pusher method using a tension spring, a pusher method using a cam, and the like are used.

In the tension spring pusher method, the pusher moves forward by the tension spring when the mold rises, and when the pusher moves forward, a blade descends to push the scrap to the lower side of the mold. In this method, the rigidity of the tension spring may be deteriorated due to repetitive work, and in this case, parts may not be moved to accurate positions, which may cause an accident.

In the cam pusher method, a drive holder connected to a cam moves forward and backward by ascending or descending of the mold, and when the pusher moves forward, the blade descends to push the scrap to the lower side of the mold. This method may prevent take-out errors according to the driving of the mold, but the cam and pusher may be damaged when the cam and pusher are restrained by foreign substances.

KR20190112379A discloses a prior art notching apparatus comprising the features of the preamble of claim 1 as appended hereto.

### SUMMARY OF THE INVENTION

The present disclosure attempts to provide a notching apparatus for an electrode substrate of a rechargeable battery capable of smoothly discharging scrap generated while manufacturing an electrode by notching a supplied electrode substrate.

According to the present invention there is provided a notching apparatus for an electrode substrate of a rechargeable battery as defined in claim 1 as appended hereto. The notching apparatus includes a lower plate assembly provided with a die, an upper plate assembly provided with a punch facing toward the die, wherein the upper plate assembly has a width in a second direction crossing the first direction, and the notching apparatus further comprises a pusher provided to a first side of the punch and the die in the second direction, and configured to notch the electrode from the electrode substrate and separate a generated scrap by pressing with a blade, wherein the blade is disposed to connect an exterior and an interior of the die in the second direction, at least one of a first side of the punch and the die is provided with a recess on which the blade may be laid, and the punch is provided with a receiving recess configured to accommodate a first end of the blade at a lower surface.

In use the punch interposes the electrode substrate that passes (during use of the apparatus) in a first direction on the lower plate assembly.

The first end of the blade may form three branch structures corresponding to an uncoated portion at an outside or an opposite side of a tab of the electrode.

The pusher may include an upper block configured to mount the blade at an operation center by a first hinge, and to elastically support second ends of the blade located at a second side of the operation center in a downward direction to vertically operate the first end of the blade located at a first side of the operation center, and a lower block provided in a lower side of the upper block, and configured to mount a hook coupled to or released from the first end at the operation center by a second hinge and to elastically support the hook from an exterior side to an interior side in the second direction.

The upper block may include a first height portion formed at a low height (*e*.*g*. first height) in the interior side in the second direction and a second height portion formed at a higher height than the first height portion in the exterior side in the second direction, and configured to install the operation center of the blade located in a first through-hole vertically penetrating a boundary of the first height portion and the second height portion by the first hinge.

The second height portion may be provided with a first elastic member in the vertical direction, the second end of the blade is provided at a lower side of the second height portion to receive an elastic force of the first elastic member, and the first end of the blade is disposed at a lower side of the first height portion to receive a downward force of the punch.

The lower block may be configured to install a lower end of the hook at a second through-hole provided at and vertically penetrating a lower side of the second height portion and a lower side of the boundary.

The blade may be provided with a hook pin in the first height portion, the lower block may be provided with a second elastic member in the second direction, and the hook may receive an elastic force of the second elastic member coupled to the hook pin as the blade descends and is disengaged from the hook pin when the blade ascends.

The hook pin may be formed as a curved surface centered on the first direction, and the hook may protrude toward the curved surface, and may have an upper inclined surface and a lower inclined surface facing the hook pin.

The blade may be provided with a third through-hole at an upper side of a second through-hole such that the hook is inserted in the vertical direction, and the hook pin may be installed in the third through-hole in the first direction.

The blade may be provided with a connection portion configured to connect the first end and the third through-hole, and the connection portion may be positioned in the recess.

At least some of the above and other features of the invention are set out in the claims.

According to an embodiment, a pusher configured to separate a scrap by pressing with a blade is provided, the blade is disposed to connect an exterior and an interior of the die, and the die or the punch is provided with a recess on which the blade may be laid. Therefore, when the electrode is manufactured by notching the supplied electrode substrate, the generated scrap may be smoothly discharged by the pusher.

### BRIEF DESCRIPTION OF THE DRAWINGS

FIG. 1 is a top plan view of a notching apparatus for an electrode substrate of a rechargeable battery according to an embodiment.
FIG. 2 is a front view according to line II-II of FIG. 1.
FIG. 3 is a perspective view showing a die, a punch, and pusher applied to a notching apparatus for an electrode substrate of a rechargeable battery of FIG. 1.
FIG. 4 is a perspective view of a pusher applied to FIG. 1 and FIG. 3.
FIG. 5 is an exploded perspective view of a pusher shown in FIG. 4.
FIG. 6 a top plan view showing a state in which a blade of a pusher of FIG. 4 is disposed in a die and a scrap of FIG. 3.
FIG. 7 is a cross-sectional view according to line VII-VII of FIG. 6, and shows operation states of a punch and an upper block at the time of immediately before descending for the notching, during descending, during ascending after the notching, and after completing the ascending.
FIG. 8 shows an operation state in which hook pin has rotated a hook around a second hinge as a punch and an upper block further descends for the notching from the state of FIG. 7.
FIG. 9 shows states during the notching and after completing the notching as the punch and the upper block further descends from the state of FIG. 8 and a punch further descends than the upper block.

### DETAILED DESCRIPTION OF THE EMBODIMENTS

Hereinafter, the present invention will be described more fully hereinafter with reference to the accompanying drawings, in which embodiments of the invention are shown. As those skilled in the art would realize, the described embodiments may be modified in various different ways, all without departing from the scope of the present invention as defined by the claims.

The drawings and description are to be regarded as illustrative in nature and not restrictive. Like reference numerals designate like elements throughout the specification.

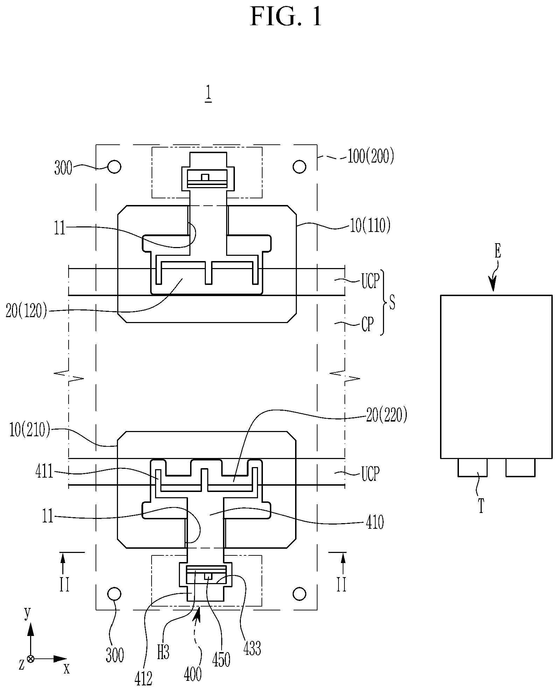

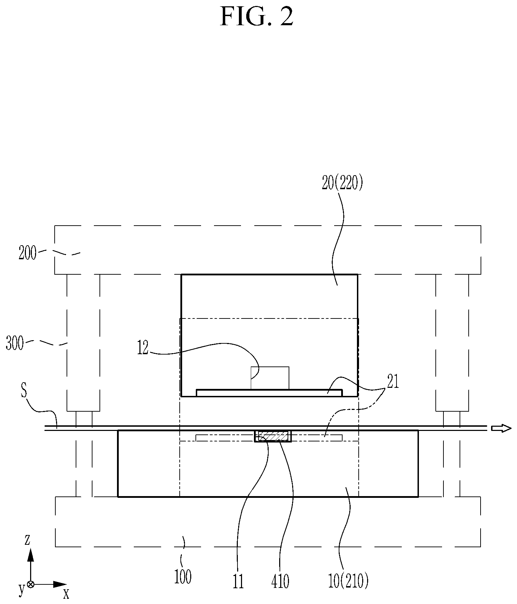

FIG. 1 is a top plan view of a notching apparatus for an electrode substrate of a rechargeable battery according to an embodiment. FIG. 2 is a front view according to line II-II of FIG. 1. Referring to FIG. 1 and FIG. 2, a notching apparatus of an embodiment includes a lower plate mold assembly 100 (hereinafter, referred to as a lower plate assembly, in short) provided with a die 10, an upper plate mold assembly 200 (hereinafter, referred to as an upper plate assembly, in short) provided with a punch 20, and a pusher 400. An upper plate assembly 200 and a lower plate assembly 100 may be interconnected to each other by a lifting member 300 that guides movement of the upper and lower plate assemblies 200 and 100 that move in opposite directions. In an example, the pusher 400 may be mounted on the lower panel assembly 100.

The upper plate assembly 200 faces toward a third direction (z-axis direction) crossing a x-y plane, interposing an electrode substrate S that passes in a first direction (x-axis direction) on the lower plate assembly 100 and has a width in a second direction (y-axis direction) crossing the first direction. The punch 20 faces the die 10 such that the electrode substrate S in the x-y plane may be notched into the electrode E.

The electrode substrate S is unwound from a reel state to be continuously supplied between the upper plate assembly 200 and the lower plate assembly 100, and includes a coated portion CP disposed along the x-axis direction in a middle of the y-axis direction and an uncoated portion UCP disposed along the x-axis direction at both ends in the y-axis direction.

Since the notched electrode E may form a different structure from both ends of the electrode substrate S in a width direction (the y-axis direction), the die 10 provided in the lower plate assembly 100 may include a first die 110 and a second die 210 for notching in different shapes, and the punch 20 provided on the upper plate assembly 200 corresponding thereto may include a first punch 120 and a second punch 220.

The first die 110 and the first punch 120 may be provided to a first side of the electrode substrate S in the second direction to notch a first side of the electrode E, and the second die 210 and the second punch 220 may be provided to a second side of the electrode substrate S in the second direction to notch a second side of the electrode E. In an embodiment, the second die 210 and the second punch 220 are formed to notch the uncoated portion UCP to a tab T portion of the electrode E, and the first die 110 and the first punch 120 are formed to notch the opposite portion of the electrode E. Hereinafter, for convenience, the second die 210 and the second punch 220 will be described as an example.

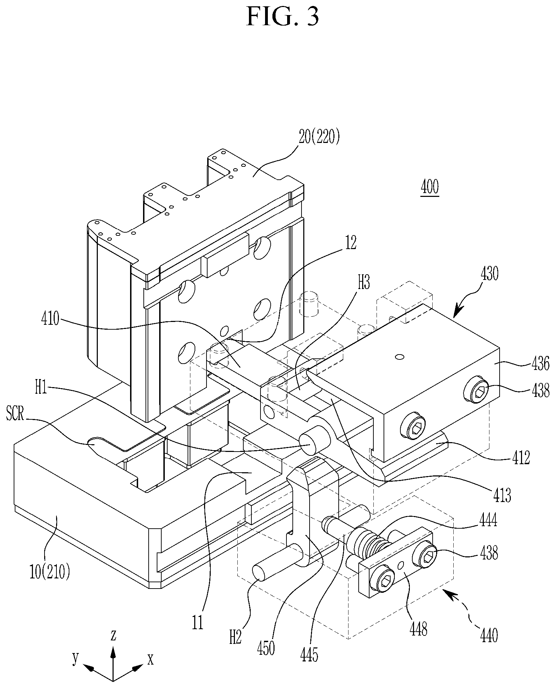

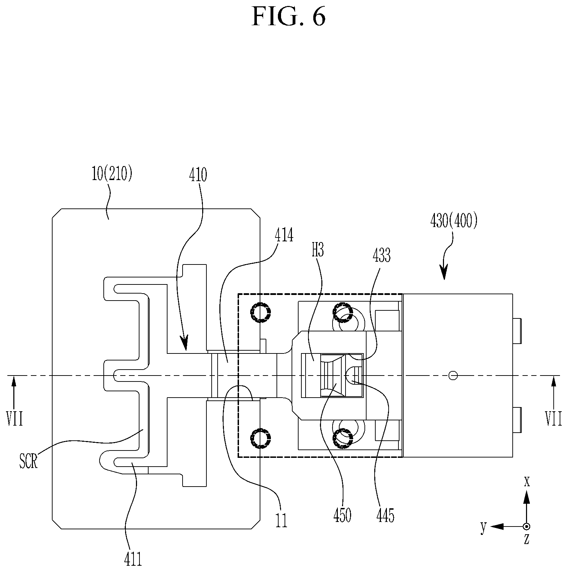

The pusher 400 is provided to a first side of the die 10 and the punch 20 in the second direction (the y-axis direction), and is configured to separate scrap SCR (refer to FIG. 3 and FIG. 6) generated by notching the electrode E from the electrode substrate S by pressing by a blade 410. The blade 410 is disposed to connect an exterior and an interior of the die 10 in the second direction (the y-axis direction). For this purpose, in an embodiment, the die 10 and the punch 20 have recesses 11 and 12 on which the blade 410 may be laid. Although not separately shown, the recess may be formed only in the die or only in the punch depending on the shape of the blade 410.

The punch 20 may have a receiving recess 21 accommodating a first end 411 of the blade 410 on a lower surface. When the punch 20 notches the electrode E from the electrode substrate S while cooperating with the die 10, the receiving recess 21 enables the first end 411 of the blade 410 disposed between the punch 20 and the die 10 to press the scrap SCR to be separated from the electrode substrate S, the electrode E, the die 10, and the punch 20, without interfering the notching process.

The first end 411 of the blade 410 may form three branch structures corresponding to the uncoated portion UCP at an outside or an opposite side of the tab T of the electrode E. The three branch structures provide separation force to the scrap SCR along the first direction (the y-axis direction) at both ends of the electrode E in the second direction (the y-axis direction) that are notched, and thereby may prevent separation error of the scrap SCR.

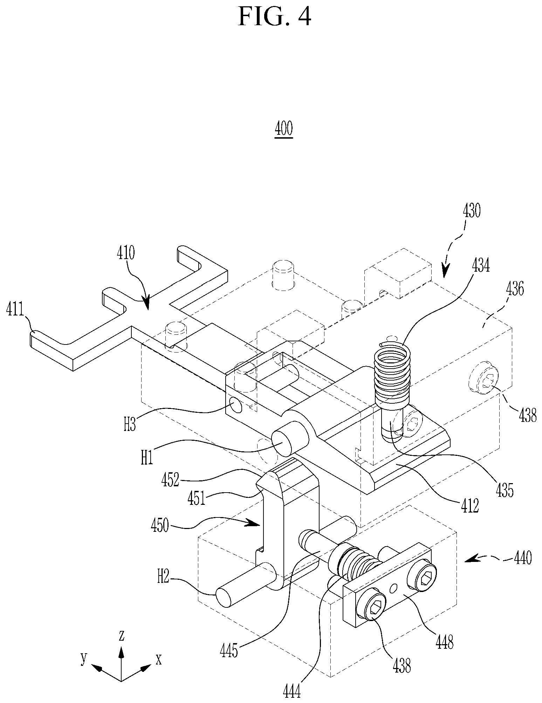

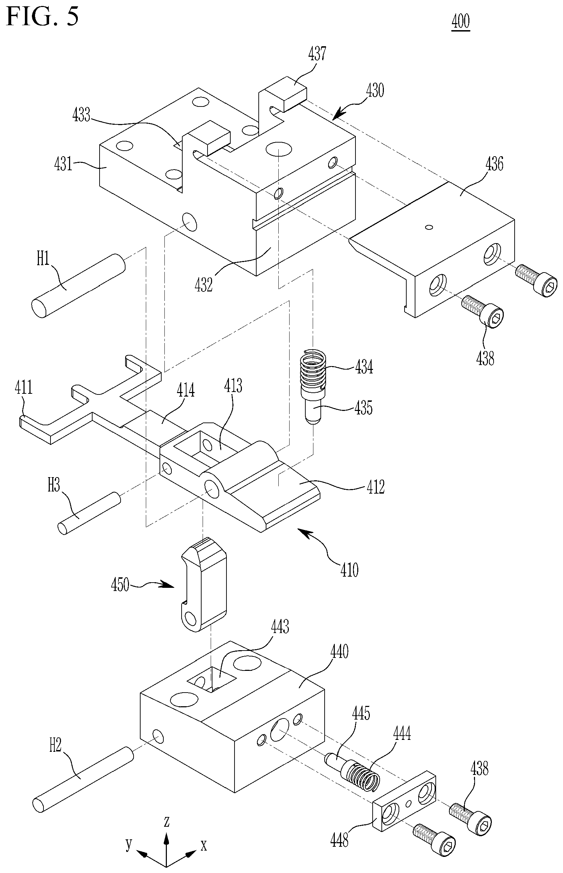

FIG. 3 is a perspective view showing a die, a punch, and pusher applied to a notching apparatus for an electrode substrate of a rechargeable battery of FIG. 1. FIG. 4 is a perspective view of a pusher applied to FIG. 1 and FIG. 3. FIG. 5 is an exploded perspective view of a pusher shown in FIG. 4. FIG. 6 a top plan view showing a state in which a blade of a pusher of FIG. 4 is disposed in a die and a scrap of FIG. 3. Referring to FIG. 3 to FIG. 6, the pusher 400 may include an upper block 430 and a lower block 440.

The upper block 430 mounts the blade 410 at an operation center by a first hinge H1, and is configured to elastically support a second end 412 of the blade 410 positioned at a second side of the operation center in downward direction, such that the first end 411 of the blade 410 positioned at a first side of the operation center may be operated in a vertical direction.

The lower block 440 is provided at a lower side of the upper block 430, and configured to mount, at a lower end, a hook 450 coupled to or released from the first end 411 at the operation center of the blade 410 by a second hinge H2 and to elastically support the hook 450 from the exterior side to the interior side in the second direction (the y-axis direction).

More specifically, the upper block 430 may include a first height portion 431 and a second height portion 432. The first height portion 431 is formed at a low height in the interior side in the second direction (the y-axis direction). The second height portion 432 is formed in the exterior side in the second direction, at a height higher than that of the first height portion 431.

The upper block 430 has a first through-hole 433 penetrating in the vertical direction at the boundary between the first height portion 431 and the second height portion 432, and installs the operating center of the blade 410 located at the first through-hole 433 by the first hinge H1. Accordingly, at the lower side of the upper block 430, the blade 410 forms the first end 411 in the interior side in the second direction (the y-axis direction), and forms the second end 412 in in the exterior side, having the first hinge H1 as the operation center.

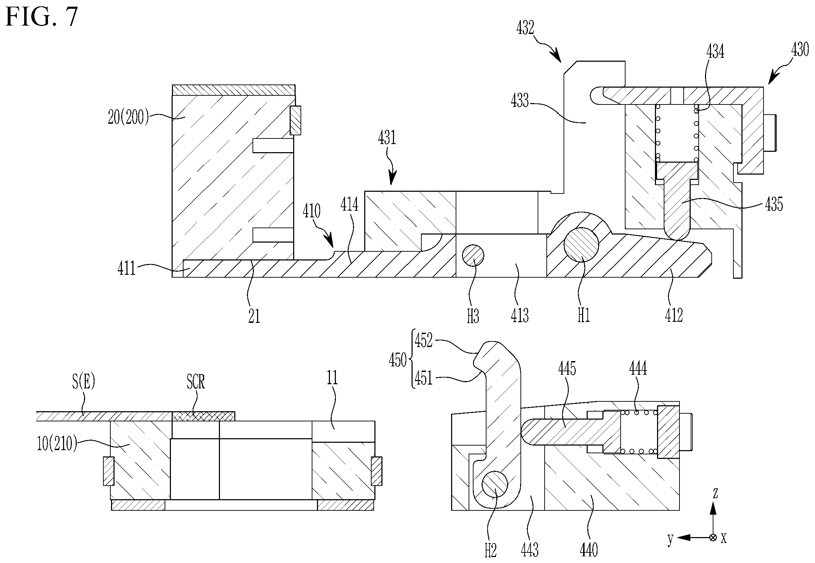

FIG. 7 is a cross-sectional view according to line VII-VII of FIG. 6, and shows operation states of a punch and an upper block at the time of immediately before descending for the notching, during descending, during ascending after the notching, and after completing the ascending. Referring to FIG. 3 to FIG. 7, the second height portion 432 may include a first elastic member 434 in the vertical direction.

As an example, the first elastic member 434 is embedded in the second height portion 432 interposing a first push member 435 and supported by a cover 436. The cover 436 is coupled to a protrusion 437 formed at an upper end of the second height portion 432 through a first side, and fixed to the second height portion 432 by a bolt 438 through a second side, thereby facilitating embedding of the first elastic member 434 and the first push member 435.

The second end 412 of the blade 410 may be provided at a lower side of the second height portion 432, and may receive a downward elastic force of the first elastic member 434 and the first push member 435. Accordingly, the first end 411 of the blade 410 may be disposed at a lower side of the first height portion 431, and may receive a downward force of the punch 20. The downward force of the punch 20 overcomes the elastic force of the first elastic member 434 and lowers the first end 411 of the blade 410 having the first hinge H1 as the operation center, and therefore, presses and separates the notching scrap SCR from the electrode substrate S and the electrode E.

The lower block 440 is provided at a lower side of the second height portion 432 and a lower side of the boundary, may be provided with a second through-hole 443 penetrated in the vertical direction, and may install a lower end of the hook 450 positioned in the second through-hole 443 by the second hinge H2. Accordingly, the hook 450 operates having the second hinge H2 as its operation center.

The blade 410 may be provided with a hook pin H3 in the first height portion 431. The lower block 440 may embed a second elastic member 444 in the second direction. As an example, the second elastic member 444 is embedded in the lower block 440 interposing the second push member 445, and fixed with a plate 448 and bolts 438.

The hook 450 receives the elastic force of the second elastic member 444 and the second push member 445 to be coupled to the hook pin H3 when the blade 410 descends. When the blade 410 rises, the hook 450 is coupled to the hook pin H3 while receiving an elastic force, and then released by the rise of the hook pin H3.

As an example, the hook pin H3 may be formed as a curved surface centered on the first direction (the x-axis direction). The hook 450 protrudes toward the curved surface of the hook pin H3 and has an upper inclined surface 452 and a lower inclined surface 451 facing the hook pin H3.

The upper inclined surface 452 softens the engagement with the hook pin H3 to reduce coupling shock when the blade 410 descends, and the lower inclined surface 451 softens the disengagement with the hook pin H3 to reduce the release shock when the blade 410 ascends.

The blade 410 may be provided with a third through-hole 413 above the second through-hole 443 such that the hook 450 is inserted in the vertical direction (z-axis direction). The hook pin H3 may be installed by extending from the third through-hole 413 in the first direction. The blade 410 may be provided with a connection portion 414 connecting the first end 411 and the third through-hole 413, and the connection portion 414 may be located in the recesses 11 and 12 (refer to FIG. 6 and FIG. 7).

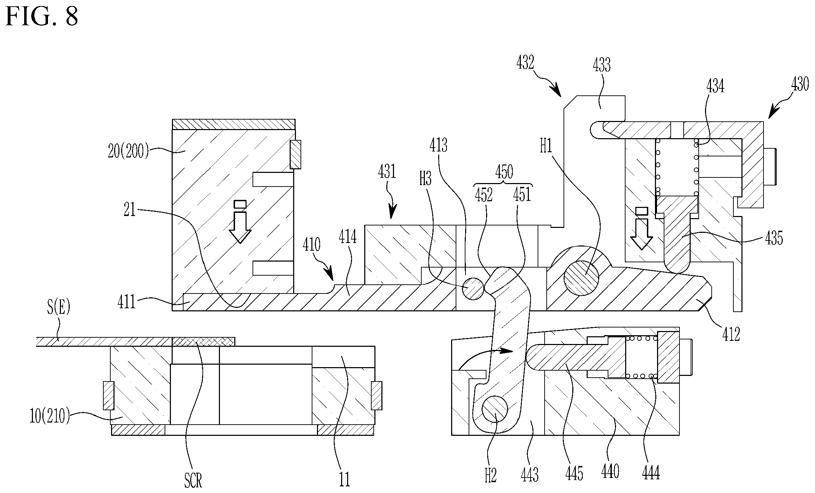

FIG. 8 shows an operation state in which hook pin has rotated a hook around a second hinge as a punch and an upper block further descends for the notching from the state of FIG. 7. Referring to FIG. 7 and FIG. 8, the notching apparatus notches the electrode substrate S to the electrode E while the punch 20 and the die 10 ascend and descend in opposite directions.

FIG. 7 is a cross-sectional view according to line VII-VII of FIG. 6, and shows operation states of a punch and an upper block at the time of immediately before descending for the notching, during descending, during ascending after the notching, and after completing the ascending. It illustrates a state just before descending for notching, and in this state, the punch 20 and the upper block 430 are located at the highest level.

Immediately before the punch 20 and the upper block 430 descend for notching, in the upper block 430 of the pusher 400, the second end 412 of the blade 410 receives a downward elastic support force by the first elastic member 434 and the first push member 435, and accordingly, the first end 411 rotates around the first hinge H1 as the operation center to be accommodated the receiving recess 21 of the punch 20. At this time, the connection portion 414 may be located in the recess 12.

In the lower block 440 of the pusher 400, the hook 450 receives an elastic support force inward in the second direction (the y-axis direction) by the second elastic member 444 and the second push member 445. Accordingly, the hook 450 rotates around the second hinge H2 and maintains a state of maximum turning inward in the second direction (the y-axis direction) (state in FIG. 7).

Referring to FIG. 7 and FIG. 8, the punch 20 and the upper block 430 are equally descending from the state of FIG. 7 to the state of FIG. 8. While descending as shown in FIG. 7, the punch 20 and the upper block 430 have additionally descended to the state of FIG. 8 for notching. Accordingly, the punch 20 and the upper block 430 further approach to the die 10 and the lower block 440, and the blade 410 further approaches to the electrode substrate S and the hook 450.

At this time, the hook pin H3 pushes the hook 450 to rotate around the second hinge H2. As a result, the hook 450 rotates around the second hinge H2, and maintains the maximum turning state outward in the second direction (the y-axis direction) (state in FIG. 8). The hook 450 is elastically supported by the elastic force of the second elastic member 444.

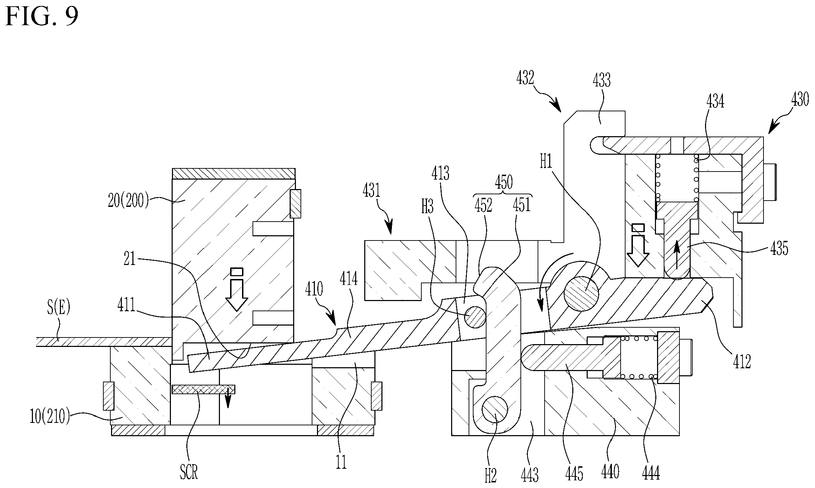

FIG. 9 shows states during the notching and after completing the notching as the punch and the upper block further descends from the state of FIG. 8 and a punch further descends than the upper block.

Referring to FIG. 8 and FIG. 9, the punch 20 and the upper block 430 descend differently from the state of FIG. 8 to the state of FIG. 9. That is, the descending amount of the punch 20 is greater than the descending amount of the upper block 430. Therefore, from a state in which the upper block 430 is in contact with the lower block 440, the punch 20 may further descend into the die 10.

As the punch 20 descends, in the upper block 430, the first end 411 of the blade 410 is pressed to descend, and thus the scrap SCR may be separated from the electrode E notched from the electrode substrate S. At this time, the connection portion 414 is located in the recesses 11 and 12, and the second end 412 of the blade 410 moves upward while overcoming the first elastic member 434 and the first push member 435.

In the lower block 440 of the pusher 400, the hook 450 is rotated around the second hinge H2 by the second elastic member 444 and the second push member 445, and thereby rotates inward in the second direction (the y-axis direction) to be caught by an upper surface of the hook pin H3.

To the contrary, referring to FIG. 9 and FIG. 8, the punch 20 and the upper block 430 ascend differently from the state of FIG. 9 to the state of FIG. 8. That is, the ascending amount of the punch 20 is greater than the ascending amount of the upper block 430. Therefore, from a state in which the upper block 430 is separated from the lower block 440, the punch 20 further ascends out of the die 10.

At this time, in the upper block 430, the second end 412 of the blade 410 is in a state pressed by the ascending of the punch 20, and accordingly, the first end 411 ascends. At this time, the connection portion 414 is located on the recess 12, and the second end 412 of the blade 410 is elastically supported by the first elastic member 434 and the first push member 435.

In the lower block 440 of the pusher 400, the hook 450 is elastically supported by the second elastic member 444 and the second push member 445 while being pushed outward in the second direction by the hook pin H3 (refer to FIG. 8).

In addition, referring to FIG. 8 and FIG. 7, the punch 20 and the upper block 430 equally ascend from the state of FIG. 8 to the state of FIG. 7. Therefore, the punch 20 and the upper block 430 become spaced apart from the die 10 and the lower block 440, and the blade 410 becomes spaced apart from the electrode substrate S and the hook 450. At this time, the hook 450 receiving the elastic force by the second elastic member 444 and the second push member 445 rotates back around the second hinge H2 while being disengaged from the hook pin H3. This completes one notching process.

A notching apparatus of an embodiment may repetitively perform the operation from the state of FIG. 7 to the state of FIG. 8, the operation from the state of FIG. 8 to the state of FIG. 9, and their reversal operations, and thereby manufacture the electrode E by notching the electrode substrate S that is continuously supplied, while smoothly discharging the generated scrap SCR.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

**<Description of symbols>**

| | | | |
|---|---|---|---|
| 10: | die | 11, 12: | recess |
| 21: | receiving recess | 20: | punch |
| 100: | lower plate assembly | 110: | first die |
| 120: | first punch | 200: | upper plate assembly |
| 210: | second die | 220: | second punch |
| 300: | lifting member | | |
| 400: | pusher | 410: | blade |
| 411: | first end | 412: | second end |
| 413: | third through-hole | | |
| 414: | connection portion | 430: | upper block |
| 431: | first height portion | 432: | second height portion |
| 433: | first through-hole | 434: | first elastic member |
| 435: | first push member | 436: | cover |
| 437: | protrusion | 438: | bolt |
| 440: | lower block | 443: | second through-hole |
| 444: | second elastic member | 445: | second push member |
| 448: | plate | 450: | hook |
| 451: | lower inclined surface | 452: | upper inclined surface |
| CP: | coated portion | E: | electrode |
| H1: | first hinge | H2: | second hinge |
| H3: | hook pin | S: | electrode substrate |
| SCR: | scrap | T: | tab |
| UCP: | uncoated portion | | |

## Claims

1. A notching apparatus for an electrode substrate (S) of a rechargeable battery, the notching apparatus comprising:
a lower plate assembly (100) provided with a die (10); and
an upper plate assembly (200) provided with a punch (20) facing toward the die (10), wherein the upper plate assembly (200) has a width in a second direction (y) crossing a first direction (x); and **characterized by**:
a pusher (400) provided to a first side of the punch (20) and the die (10) in the second direction (y), and configured to notch the electrode (E) from the electrode substrate (S) and separate a generated scrap (SCR) by pressing with a blade (410),
wherein the blade (410) is disposed to connect an exterior and an interior of the die (10) in the second direction (y),
at least one of a first side of the punch (20) and the die (10) is provided with a recess (11, 12) on which the blade (410) may be laid, and
the punch (20) is provided with a receiving recess (21) configured to accommodate a first end (411) of the blade (421) at a lower surface.

2. The notching apparatus of claim 1, wherein the first end (411) of the blade (421) forms three branch structures corresponding to an uncoated portion (UCP) at an outside or an opposite side of a tab of the electrode (E).

3. The notching apparatus of claim 1 or claim 2, wherein the pusher (400) comprises:
an upper block (430) configured to mount the blade (410) at an operation center by a first hinge (H1), and to elastically support a second end (412) of the blade (410) located at a second side of the operation center in a downward direction to vertically operate the first end (411) of the blade (410) located at a first side of the operation center; and
a lower block (440) provided at a lower side of the upper block (430), and configured to mount a hook (450) coupled to or released from the first end (411) at the operation center by a second hinge (H2) and to elastically support the hook (450) from an exterior side to an interior side in the second direction (y).

4. The notching apparatus of claim 3, wherein:
the upper block (430) comprises a first height portion (431) formed at a low height in the interior side in the second direction (y) and a second height portion (432) formed at a higher height than the first height portion (431) in the exterior side in the second direction (y), and
the notching apparatus is configured to install the operation center of the blade (410) located in a first through-hole (433) vertically penetrating a boundary of the first height portion (431) and the second height portion (432) by the first hinge (H1).

5. The notching apparatus of claim 4, wherein:
the second height portion (432) is provided with a first elastic member (434) in the vertical direction;
the second end (412) of the blade (410) is provided at a lower side of the second height portion (432) to receive an elastic force of the first elastic member (431); and
the first end (411) of the blade (410) is disposed at a lower side of the first height portion (431) to receive a downward force of the punch (20).

6. The notching apparatus of claim 4 or claim 5, wherein the lower block (440) is configured to install a lower end of the hook (450) at a second through-hole (443) provided at and vertically penetrating a lower side of the second height portion (432) and a lower side of the boundary.

7. The notching apparatus of any one of claims 4 to 6, wherein:
the blade (410) is provided with a hook pin (H3) in the first height portion (431);
the lower block (440) is provided with a second elastic member (444) in the second direction (y); and
the hook (450) receives an elastic force of the second elastic member (444) coupled to the hook pin (H3) as the blade (410) descends and is disengaged from the hook pin (H3) when the blade (410) ascends.

8. The notching apparatus of claim 7, wherein:
the hook pin (H3) is formed as a curved surface centered on the first direction (x); and
the hook (450) protrudes toward the curved surface, and has an upper inclined surface and a lower inclined surface facing the hook pin (H3).

9. The notching apparatus of claim 7 or claim 8, wherein:
the blade (410) is provided with a third through-hole (413) at an upper side of a second through-hole (443) such that the hook (450) is inserted in the vertical direction (z); and
the hook pin (H3) is installed in the third through-hole (413) in the first direction (x).

10. The notching apparatus of claim 9, wherein:
the blade (410) is provided with a connection portion (414) configured to connect the first end (411) and the third through-hole (413); and
the connection portion (414) is positioned in the recess.

## Patentansprüche

1. Kerbeinrichtung für ein Elektrodensubstrat (S) einer aufladbaren Batterie, die Kerbeinrichtung umfassend:
eine untere Plattenbaugruppe (100), die mit einer Matrize (10) versehen ist; und
eine obere Plattenbaugruppe (200), die mit einem Stempel (20) versehen ist, der der Matrize (10) zugewandt ist, wobei die obere Plattenbaugruppe (200) eine Breite in einer zweiten Richtung (y) aufweist, die eine erste Richtung (x) kreuzt; und **gekennzeichnet durch**:
einen Drücker (400), der auf einer ersten Seite des Stempels (20) und der Matrize (10) in der zweiten Richtung (y) versehen und dazu ausgelegt ist, die Elektrode (E) vom Elektrodensubstrat (S) zu kerben und einen erzeugten Abfall (SCR) durch Pressen mit einer Klinge (410) abzutrennen,
wobei die Klinge (410) so angeordnet ist, dass sie eine Außenseite und eine Innenseite der Matrize (10) in der zweiten Richtung (y) verbindet,
mindestens eine einer ersten Seite des Stempels (20) und der Matrize (10) mit einer Aussparung (11, 12) versehen ist, an der die Klinge (410) eingelegt werden kann, und
der Stempel (20) mit einer Aufnahmeaussparung (21) versehen ist, die dazu ausgelegt ist, ein erstes Ende (411) der Klinge (421) an einer unteren Fläche unterzubringen.

2. Kerbeinrichtung nach Anspruch 1, wobei das erste Ende (411) der Klinge (421) drei Verzweigungsstrukturen bildet, die einem unbeschichteten Abschnitt (UCP) an einer Außenseite oder einer gegenüberliegenden Seite einer Lasche der Elektrode (E) entsprechen.

3. Kerbeinrichtung nach Anspruch 1 oder Anspruch 2, wobei der Drücker (400) umfasst:
einen oberen Block (430), der dazu ausgelegt ist, die Klinge (410) über ein erstes Scharnier (H1) an einem Betätigungszentrum anzubringen, und ein zweites Ende (412) der Klinge (410), das sich auf einer zweiten Seite des Betätigungszentrums in einer Abwärtsrichtung befindet, elastisch zu lagern, um das erste Ende (411) der Klinge (410), das sich auf einer ersten Seite des Betätigungszentrums befindet, vertikal zu betätigen; und
einen unteren Block (440), der auf einer unteren Seite des oberen Blocks (430) versehen und dazu ausgelegt ist, einen Haken (450), der mit dem ersten Ende (411) gekoppelt oder von diesem freigesetzt wird, am Betätigungszentrum über ein zweites Scharnier (H2) anzubringen und den Haken (450) in der zweiten Richtung (y) von einer Außenseite zu einer Innenseite elastisch zu lagern.

4. Kerbeinrichtung nach Anspruch 3, wobei:
der obere Block (430) einen ersten Höhenabschnitt (431) umfasst, der auf einer niedrigen Höhe in der Innenseite in der zweiten Richtung (y) gebildet ist, und einen zweiten Höhenabschnitt (432), der auf einer höheren Höhe als der erste Höhenabschnitt (431) in der Außenseite in der zweiten Richtung (y) gebildet ist, und
die Kerbeinrichtung dazu ausgelegt ist, das Betätigungszentrum der Klinge (410), das sich in einem ersten Durchgangsloch (433) befindet, das vertikal durch eine Begrenzung des ersten Höhenabschnitts (431) und des zweiten Höhenabschnitts (432) hindurchgeht, über das erste Scharnier (H1) zu installieren.

5. Kerbeinrichtung nach Anspruch 4, wobei:
der zweite Höhenabschnitt (432) mit einem ersten elastischen Element (434) in der vertikalen Richtung versehen ist;
das zweite Ende (412) der Klinge (410) auf einer unteren Seite des zweiten Höhenabschnitts (432) versehen ist, um eine elastische Kraft des ersten elastischen Elements (431) aufzunehmen; und
das erste Ende (411) der Klinge (410) auf einer unteren Seite des ersten Höhenabschnitts (431) angeordnet ist, um eine nach unten gerichtete Kraft des Stempels (20) aufzunehmen.

6. Kerbeinrichtung nach Anspruch 4 oder Anspruch 5, wobei der untere Block (440) dazu ausgelegt ist, ein unteres Ende des Hakens (450) an einem zweiten Durchgangsloch (443) zu installieren, das auf einer unteren Seite des zweiten Höhenabschnitts (432) und einer unteren Seite der Begrenzung versehen ist und vertikal durch diese hindurchgeht.

7. Kerbeinrichtung nach einem der Ansprüche 4 bis 6, wobei:
die Klinge (410) mit einem Hakenstift (H3) im ersten Höhenabschnitt (431) versehen ist;
der untere Block (440) mit einem zweiten elastischen Element (444) in der zweiten Richtung (y) versehen ist; und
der Haken (450) eine elastische Kraft des zweiten elastischen Elements (444), das mit dem Hakenstift (H3) gekoppelt ist, aufnimmt, wenn die Klinge (410) nach unten geht, und vom Hakenstift (H3) gelöst wird, wenn die Klinge (410) nach oben geht.

8. Kerbeinrichtung nach Anspruch 7, wobei:
der Hakenstift (H3) als eine gekrümmte Fläche gebildet ist, die auf der ersten Richtung (x) zentriert ist; und
der Haken (450) zur gekrümmten Fläche hin vorspringt und eine obere schräge Fläche und eine untere schräge Fläche aufweist, die dem Hakenstift (H3) zugewandt ist.

9. Kerbeinrichtung nach Anspruch 7 oder Anspruch 8, wobei:
die Klinge (410) auf einer oberen Seite eines zweiten Durchgangslochs (443) mit einem dritten Durchgangsloch (413) versehen ist, sodass der Haken (450) in der vertikalen Richtung (z) eingeführt wird; und
der Hakenstift (H3) in der ersten Richtung (x) in dem dritten Durchgangsloch (413) installiert wird.

10. Kerbeinrichtung nach Anspruch 9, wobei:
die Klinge (410) mit einem Verbindungsabschnitt (414) versehen ist, der dazu ausgelegt ist, das erste Ende (411) und das dritte Durchgangsloch (413) zu verbinden; und
der Verbindungsabschnitt (414) in der Aussparung positioniert ist.

## Revendications

1. Appareil d'encochage pour un substrat d'électrode (S) d'une batterie rechargeable, le dispositif d'encochage comprenant :
un ensemble plaque inférieure (100) doté d'une matrice (10) ; et
un ensemble plaque supérieure (200) doté d'un poinçon (20) orienté vers la matrice (10), dans lequel l'ensemble plaque supérieure (200) présente une largeur dans une seconde direction (y) croisant une première direction (x) ; et **caractérisé par** :
un poussoir (400) monté sur un premier côté du poinçon (20) et de la matrice (10) dans la seconde direction (y), et configuré pour entailler l'électrode (E) du substrat d'électrode (S) et séparer un déchet généré (SCR) en appuyant avec une lame (410),
dans lequel la lame (410) est disposée de manière à relier un extérieur et un intérieur de la matrice (10) dans la seconde direction (y),
au moins une des faces du poinçon (20) et de la matrice (10) est dotée d'un évidement (11, 12) sur lequel la lame (410) peut être posée, et
le poinçon (20) est doté d'un logement de réception (21) configuré pour accueillir une première extrémité (411) de la lame (421) sur une surface inférieure.

2. Appareil d'encochage selon la revendication 1, dans lequel la première extrémité (411) de la lame (421) forme trois structures de branche correspondant à une partie non revêtue (UCP) à l'extérieur ou du côté opposé d'une languette de l'électrode (E).

3. Appareil d'encochage selon la revendication 1 ou la revendication 2, dans lequel le poussoir (400) comprend :
un bloc supérieur (430) configuré pour monter la lame (410) au niveau d'un centre d'opération au moyen d'une première charnière (H1) et pour supporter élastiquement une seconde extrémité (412) de la lame (410) située d'un second côté du centre d'opération dans une direction descendante pour actionner verticalement la première extrémité (411) de la lame (410) située d'un premier côté du centre d'opération ; et
un bloc inférieur (440) prévu sur le côté inférieur du bloc supérieur (430) et configuré pour monter un crochet (450) couplé à la première extrémité (411), ou libéré de celle-ci, au niveau du centre d'opération par une seconde charnière (H2) et pour supporter élastiquement le crochet (450) d'un côté extérieur à un côté intérieur dans la seconde direction (y).

4. Appareil d'encochage selon la revendication 3, dans lequel :
le bloc supérieur (430) comprend une première partie de hauteur (431) formée à une faible hauteur du côté intérieur dans la seconde direction (y) et une seconde partie de hauteur (432) formée à une hauteur supérieure à celle de la première partie de hauteur (431) du côté extérieur dans la seconde direction (y), et
l'appareil d'encochage est configuré pour installer le centre de fonctionnement de la lame (410) situé dans un premier trou traversant (433) pénétrant verticalement une limite de la première partie de hauteur (431) et de la seconde partie de hauteur (432) par la première charnière (H1).

5. Appareil d'encochage selon la revendication 4, dans lequel :
la seconde partie de hauteur (432) est dotée d'un premier élément élastique (434) dans la direction verticale ;
la seconde extrémité (412) de la lame (410) est dotée sur le côté inférieur de la seconde partie de hauteur (432) pour recevoir une force élastique du premier élément élastique (431) ; et
la première extrémité (411) de la lame (410) est disposée sur un côté inférieur de la première partie de hauteur (431) pour recevoir une force descendante du poinçon (20).

6. Appareil d'encochage selon la revendication 4 ou la revendication 5, dans lequel le bloc inférieur (440) est configuré pour installer une extrémité inférieure du crochet (450) dans un deuxième trou traversant (443) ménagé et pénétrant verticalement dans un côté inférieur de la seconde partie de hauteur (432) et dans un côté inférieur de la limite.

7. Appareil d'encochage selon l'une quelconque des revendications 4 à 6, dans lequel :
la lame (410) est dotée d'une goupille de crochet (H3) dans la première partie de hauteur (431) ;
le bloc inférieur (440) est doté d'un second élément élastique (444) dans la seconde direction (y) ; et
le crochet (450) reçoit une force élastique du second élément élastique (444) couplé à la goupille de crochet (H3) au fur et à mesure que la lame (410) descend et est désolidarisée de la goupille de crochet (H3) lorsque la lame (410) remonte.

8. Appareil d'encochage selon la revendication 7, dans lequel :
la goupille de crochet (H3) est formée comme une surface courbe centrée sur la première direction (x) ; et
le crochet (450) fait saillie vers la surface incurvée et présente une surface inclinée supérieure et une surface inclinée inférieure faisant face à la goupille de crochet (H3).

9. Appareil d'encochage selon la revendication 7 ou la revendication 8, dans lequel :
la lame (410) est dotée d'un troisième trou traversant (413) sur le côté supérieur d'un deuxième trou traversant (443) de telle sorte que le crochet (450) soit inséré dans la direction verticale (z) ; et
la goupille de crochet (H3) est installée dans le troisième trou traversant (413) dans la première direction (x).

10. Appareil d'encochage selon la revendication 9, dans lequel :
la lame (410) est dotée d'une partie de liaison (414) configurée pour relier la première extrémité (411) et le troisième trou traversant (413) ; et
la partie de liaison (414) est positionnée dans l'évidement.
